# EUROPEAN PATENT SPECIFICATION

(11) **EP 1 213 304 B1**
(45) Date of publication and mention of the grant of the patent: **09.03.2005**
(21) Application number: 01128834.7
(22) Date of filing: 04.12.2001
(51) Int. Cl.: C08F 4/64, C08F 4/02, C08F 10/00

(54) **Supported metallocene catalyst and the preparation process thereof**
Geträgerter Metallocenkatalysator und Verfahren zu seiner Herstellung
Catalyseur à base de métallocène sur support et procédé pour sa préparation

(30) Priority: 05.12.2000 CN 00134121
(43) Date of publication of application: 12.06.2002
(73) Proprietor: China Petroleum & Chemical Corporation, Beijing 100029 (CN); RESEARCH INSTITUTE OF PETROLEUM PROCESSING, SINOPEC, Beijng 100083 (CN)
(72) Inventor: Chen, Wei, Rd., Haidian Dist., Beijing 100083 (CN); Zheng, Gang, Rd., Haidian Dist., Beijing 100083 (CN); Jing, Zhenhua, Rd., Haidian Dist., Beijing 100083 (CN); Sun, Chunyan, Rd., Haidian Dist., Beijing 100083 (CN); Wang, Ruen, Rd., Haidian Dist., Beijing 100083 (CN); Shi, Xiaolan, Rd., Haidian Dist., Beijing 100083 (CN); Guo, Zifang, Rd., Haidian Dist., Beijing 100083 (CN); Xu, Xin, Rd., Haidian Dist., Beijing 100083 (CN)
(74) Representative: Leson, Thomas Johannes Alois, Dipl.-Ing.

(56) References cited:
- WO-A-00/47635
- DATABASE WPI Section Ch, Week 200013 Derwent Publications Ltd., London, GB; Class A17, AN 2000-137731 XP002193780 & CN 1 235 166 A (CHINA PETROCHEMICAL CORP), 17 November 1999 (1999-11-17)

## Description

### Field of the Invention

This invention relates to a supported metallocene catalyst and a preparation process thereof, and particularly to a catalyst prepared by supporting a metallocene •ether •inorganic salt adduct on silica and a preparation process thereof.

### Background of the Invention

Currently, supported metallocene catalysts have been broadly used in a variety of polymerization processes, most of which are used in gas phase polymerization or slurry polymerization. However, a critical problem of process is fouling phenomena of polymer, which results in poor heat transfer in reactor and thus the temperature rises rapidly, i.e., "runaway" of temperature occurs, therefore the polymerization reaction has to be ceased.

Many methods to solve the fouling problem are to improve the supported metallocene catalysts, for example, US 5,332,706 discloses an impregnation process for preparing supported metallocene catalysts. The patent deems that the reason for resulting in the fouling phenomena lies in that, methylaluminoxane (MAO) as a co-catalyst is injected into reactor in liquid form. So MAO is used as a solution alternatively for impregnating the carrier silica to prepare the supported metallocene catalyst containing MAO. In this case, the amount of the impregnating solution used is less then the total pore volume of the silica. When such a method is used for preparing the catalyst in a large scale, it is prone to cause local excess of the impregnating solution, and thus results in uneven distribution of active constituents.

In US 5,625,015, US 5,665,665 and US 5,721,184, a spray impregnation technique is used to prepare the supported metallocene catalyst. In said technique, the metallocene component and MAO are first prepared as a solution, which is then sprayed upon a carrier. In this process, the volume of the prepared solution is more than the total pore volume of the carrier, but does not exceed the volume being able to have the carrier slurried. Such a spray impregnation process has relatively high requirements for equipment and is not easy to impregnate uniformly.

In US 5,863,853, a carrier having 10∼500µm of average particle size is used, and a solution containing a metallocene and an activator is used to impregnate the carrier in a volume being 1~2 times of the total pore volume of the carrier. Although the fouling phenomena could be reduced for the catalyst prepared in this way, the catalyst activity is not high. When the polymerization of ethylene is carried out at 60 °C and 517 kPa of ethylene pressure, the catalyst activity is only about 400 g polymer/g catalyst.

In US 5,552,358, it is deemed that the reason for causing fouling phenomena lies in that the supported MAO contains excess of trimethyl aluminum which is added purposely to prevent trimethyl aluminum from hydrolysis during process of MAO preparation. Therefore, in this patent, an emulsion containing tiny water drops is contacted with a solution of metallocene active component and MAO to effectively hydrolyze the excess amount of trimethyl aluminum. However, it is needed to precisely control the water content of the emulsion during the operation.

CN 1235166A discloses a process for preparing a supported metallocene catalyst, comprising treating a metallocene •ether• inorganic salt adduct and a partially-dehydroxylated silica, respectively, with a solution of methylaluminoxane in toluene to form respective suspensions, which are then contacted and mixed thoroughly to prepare a solid catalyst supported with the metallocene adduct. When the catalyst prepared by this process is used for the slurry or gas phase polymerization of ethylene, spherical polyethylene particles are obtained with a moderate particle size, a uniform distribution of particle sizes and a high bulk density. Its defect is that serious fouling phenomena occurred only more than ten hours later after the polymerization started when said catalyst was used for the continuous slurry polymerization of ethylene. In that case, "runaway" of temperature occurs, and the polymerization reaction has to be ceased.

### Summary of the Invention

One objective of the present invention is to provide a supported metallocene adduct catalyst which is able to reduce the fouling phenomena and elongate the reaction time in the continuous polymerization.

Said supported metallocene catalyst of the present invention comprises following components:
(a) a metallocene • ether • inorganic salt adduct having a general formula as follows:

   Cp'₂ MQ₂ • Et • nM'Q_{2/n}
(b) an alkylaluminoxane, and
(c) a silica carrier, where in said formula of (a), Cp' is a cyclopentadienyl or a ligand having cyclopentadiene skeleton containing one or more substitution groups R, wherein two adjacent substitution groups can be interconnected to form a condensed ring and R is selected from the group consisting of hydrogen, C₁~C₁₂ alkyl, alkoxy, silyl, aryl or arylalkoxy;
   M is one element selected from group IVB in the Period Table of the Elements;
   Q is halogen;
   Et is diethyl ether or tetrahydrofuran;
   M' is selected from the group consisting of alkali metal or alkali earth metal;
   n is 1 or 2; if M' is of alkali metals, n is 2; if M' is of alkali earth metals, n is 1;
wherein the supported catalyst has an average particle diameter of 20∼40µm, the amount of the particles having diameter smaller than 10 µm is less than 10 wt%, the amount of the particles having diameter greater than 70 µm is less than 30 wt%, and the amount of the particles having diameter between 20~70µm is 45~65 wt%.

Another object of the present invention is to provide a process for preparation of said supported metallocene adduct catalyst. It comprises steps of:
(1) treating a metallocene • ether • inorganic salt adduct and a partially-dehydroxylated silica respectively with an solution of alkylaluminoxane in toluene to form respective suspensions; then contacting and mixing thoroughly the two suspensions, reducing the pressure of the mixed suspension to remove the solvent and drying the resultant remainder,
(2) adding a saturated aliphatic hydrocarbon to the dried solids aforesaid to form a suspension; after stirring, keeping the resultant suspension at a standstill till solids no longer settle, then decanting the supernatant,
(3) adding again the saturated aliphatic hydrocarbon to the remainder to repeat the operation of step (2) till the supernatant becomes colorless, then drying the remainder.

### Detailed Description of the Invention

We have found that part active component consisting of metallocene and alkylaluminoxane has a weaker adsorption on the surface of silica. During polymerization, particularly during continuous slurry polymerization, that part active component is prone to separate from the support to form the fine "homogenous phase" catalyst powder comprised active components. In addition, the metallocene and alkylaluminoxane components that are not supported on the support can also serve as active component in the form of fine particles. The aforesaid fine particles formed during the supporting process of the catalyst are very easy to suspend in solution, to deposit cumulatively on the wall surface of the reactor during continuous slurry polymerization. These fine particles being prone to deposit on the wall surface of the reactor have certain activity to initiate the polymerization of monomer, and thus causes fouling phenomena of polymer happening. As a result, the heat transfer of the reactor is deteriorated and then the polymerization temperature is elevated rapidly. Finally "runaway" of temperature phenomena appears and the reaction has to be ceased. Therefore, the content of fine particles in the supported catalyst of the present invention is rigorously restricted. Thus the fouling phenomena of polymer caused by these fine particles with certain activity deposited on the wall of the reactor is reduced.

The supported metallocene catalyst according to the present invention comprises following components:
(a) a metallocene •ether• inorganic salt adduct having a general formula as follows:

   Cp'₂ MQ₂• Et • nM'Q_{2/n}
(b) an alkylaluminoxane, and
(c) a silica carrier,
where in said formula of (a), Cp' is a cyclopentadienyl or a ligand having cyclopentadiene skeleton containing one or more substitution groups R, wherein two adjacent substitution groups can be interconnected to form a condensed ring and R is selected from the group consisting of hydrogen, C₁~C₁₂ alkyl, alkoxy, silyl, aryl or arylalkoxy;
M is one element selected from group IVB in the Period Table of the Elements;
Q is halogen;
Et is diethyl ether or tetrahydrofuran;
M' is selected from the group consisting of alkali metal or alkali earth metal;
n is 1 or 2; if M' is of alkali metals, n is 2; if M' is of alkali earth metals, n is 1.

The suitable particle distribution of said supported catalyst should be as follows: the average particle diameter of catalyst is 20∼40µm; the amount of the particles having diameter smaller than 10 µm is less than 10 % by weight of the catalyst particles, preferably, the amount of the particles having diameter smaller than 2µm is less than 0.4 % by weight, and the amount of the particles having diameter greater than 70µm is less than 30% by weight, and the amount of the particles having diameter between 20 and 70 µm is 45∼65 % by weight.

In said adduct formula, Cp' is preferably cyclopentadienyl, indenyl, fluorenyl or an aforesaid group monosubstituted or multi-substituted by C₁ - C₆ alkyl, and more preferable methyl cyclopentadienyl, n-butyl cyclopentadienyl, iso-butyl cyclopentadienyl, ethyl cyclopentadienyl, propyl cyclopentadienyl, pentamethyl cyclopentadienyl, indenyl or fluorenyl.

Preferably, said M is titanium or zirconium, Q is chlorine, M' is lithium, and n is 2; and Et is tetrahydrofuran.

Said alkylaluminoxane may be linear or cyclic, having a formula as follows: 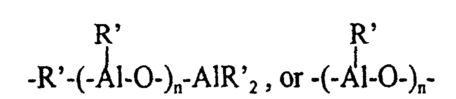 wherein R' is a C₁~C₁₂ alkyl, and preferably methyl, ethyl, propyl, butyl, amyl, hexyl or octyl, n is 1~20. It is more preferably methylaluminoxane or ethylaluminoxane.

Said silica carrier has a surface area of 150~500 m²/g, preferably 200∼400 m²/g; a pore volume of 1.0~5.0 ml/g, preferably 2.0~4.0 ml/g.

In the supported catalyst of the present invention, the content of group IVB element M is 0.01~1.5wt%, preferably 0.1~1.2wt%; the content of aluminum is 3∼40wt%, preferably 10~30wt%.

The present invention employs a washing mode to remove fine particles of the supported catalyst. The preparation process includes steps of:
(1) treating a metallocene • ether • inorganic salt adduct and a partially-dehydroxylated silica with an solution of alkylaluminoxane in toluene respectively to form respective suspensions, then contacting and mixing thoroughly the two obtained suspensions, reducing pressure to remove the solvent and drying the remainder;
(2) adding a saturated aliphatic hydrocarbon to the dried solid aforesaid to form a suspension, stirring and then keeping the resultant suspension at a standstill till the solids no longer settle, and then decanting the supernatant;
(3) adding again the saturated aliphatic hydrocarbon to the remainder obtained, and repeating the operation of the step (2) till the supernatant becomes colorless, then drying the remainder.

Said partially-dehydroxylated silica in the step (1) aforesaid is obtained by calcining the silica gel under nitrogen atmosphere at 200~800°C for 3~8 hours.

The process for preparing the suspension of the metallocene • ether• inorganic salt adduct comprises: mixing the adduct with the solution of alkylaluminoxane in toluene in a weight ratio of the adduct to the alkylaluminoxane, 1:0.5~100, then stirring at room temperature for 0.1~10 hours.

The process for preparing the suspension of the partially-dehydroxylated silica comprises: mixing the partially-dehydroxylated silica with the solution of alkylaluminoxane in toluene in a weight ratio of silica to the alkylaluminoxane being 1:0.1~5; then stirring at room temperature for 0.1~10 hours.

Said alkylaluminoxane is preferably methylaluminoxane or ethylaluminoxane.

The contacting temperature of said two suspensions is 30~95°C, preferably 50~80°C, wherein a weight ratio of the partially-dehydroxylated silica to the adduct is 1~100:1, desirably 5~50:1. The drying temperature after the solvent is removed is preferably 20~100°C.

The step (2) aforesaid is washing catalyst, wherein the solvent used for washing is selected from C₅~C₈ of saturated aliphatic hydrocarbons, preferably hexane or n-heptane. In this step, a saturated aliphatic hydrocarbon is added to the solids at first to form a suspension at a temperature of 30~80°C, preferably 40~70°C. The suspension is stirred for 0.5-4.0 hours and then is kept at a standstill till the solids no longer settle. The time for keeping at a standstill may be 0.5~4.0 hours in general, and preferably 0.5-2.0 hours, or may be elongated further. Said supernatant is referred herein to a solvent containing suspended fine solids incapable to settle. The supernatant should be removed from an outlet above the settled solid, the preferred process is to pressurize the washing system with nitrogen gas or other gasses inert to the reactants, products and catalysts to press the supernatant out of the system.

In the step (2), the weight ratio of the saturated aliphatic hydrocarbon used for washing to the solids is 0.5~10:1, preferably 1∼5:1. The step (3) is for repeating washing, wherein the number of washing times in step (2) and step (3) is at least 3, preferably 3∼6. The times of the washing are determined such that the washing is carried out till the supernatant becomes colorless.

The process for preparing the adduct of the present invention, as described in CN 1235166A, comprises: reacting a ligand compound having cyclopentadiene skeleton with an alkaline reagent at -10~30°C, ligand anion; then reacting the produced ligand anion with a metal compound having a general formula of MQ₄ at -78~30°C to form a metallocene, which is simultaneously interacted with the inorganic salt released from the MAO metallocene production and the ether solvent to form a "metallocene • ether • inorganic salt adduct"; decanting the solvent, desirably decanting 50~98% of the solvent; adding an alkane to disperse the remainder; and finally filtering and drying the remainder to obtain the adduct as a solid product.

In the preparation process aforesaid, the ligand compounds having cyclopentadiene skeleton may contain one or more substitution groups R, wherein two adjacent substitution groups may interconnect to form a condensed ring; preferred ligand compound is cyclopentadiene, C₁~C₁₂ alkyl-monosubstituted or multi-substituted cyclopentadiene, fluorene, or indene, particularly cyclopentadiene, methyl cyclopentadiene, butyl cyclopentadiene, pentamethyl cyclopentadiene, fluorene, or indene. Said substituted cyclopentadienes are prepared by using a well known process, for example, by reacting a haloalkane with excess amount of cyclopentadiene under a condition of phase-transition catalysis.

Said alkaline reagent is an organic compound of alkali metals or alkali earth metals, preferably alkyl lithium or aryl lithium, most preferably butyl lithium.

In said MQ₄ metal compound, M is any one of the elements selected from Group IVB in the Periodic Table of Elements, preferably zirconium or titanium, most preferably zirconium, and Q is halogen, preferably chlorine.

Said alkane used for dispersing the remainder is selected from C₅ - C₁₂ alkane, preferably is a petroleum ether with the boiling range of 60~90°C. The alkane is preferably added in an amount of 1∼10 times of the remainder by volume.

The supported metallocene catalyst said in the present invention is suitable for polymerization of ethylene or copolymerization of ethylene with an α-olefin. The polymerization can be carried out in a mode of gas phase polymerization or slurry polymerization. When the supported catalyst provided according to the present invention is used for the slurry polymerization in a reaction medium of C₅~C₁₂ alkane, the reaction should be carried out under a condition sufficient to have the olefin polymerized, wherein the preferred polymerization temperature is 60~95°C and the pressure is 0.3~1.2Mpa. Said α-olefin are preferably of C₃~C₈.

The supported catalyst provided in the present invention has a high stability in favor of storage and transport. Since the supporting process is carried out after the adduct is treated with MAO, no additional MAO is needed to be used as a scavenger or co-catalyst to obtain a high reactivity when the supported catalyst is used for polymerization. Since the content of the fine particles in the supported catalyst is reduced, the possibility of the fouling phenomena is thus reduced. In one embodiment of the present invention, the catalyst was used in the continuous slurry polymerization of ethylene, the polymerization could be continuously carried out for more than 200 hours without appearance of the fouling phenomena.

The following Examples are intended to illustrate, but not to limit, the present invention further.

### Example 1

### Preparation of the supported catalyst of the present invention

(1) Preparing a metallocene adduct of di-(n-butyl cyclopentadienyl) zirconium dichloride • tetrahydrofuran •lithium chloride having the formula of (BuCp)₂ZrCl₂ • THF • 2LiCl

Being cooled in an ice-water bath, 36.7ml(0.09 mol) of 2.5M butyl lithium solution in hexane was dripped slowly into 100 ml tetrahydrofuran (THF) solution containing 11.0g (0.09 mol) of n-butyl cyclopentadiene with stirring. After dripping, kept on stirring for 1 hour to obtain n-butyl cyclopentadienyl lithium as a white muddy solution. At -78°C, 10.7g (0.045mol) of ZrCl₄ was dripped slowly to the solution of n-butyl cyclopentadienyl lithium aforesaid. After dripping, the resultant solution was stirred overnight to obtain a dark red muddy solution. 90% of the solvent was removed by reducing pressure, and the remainder was dispersed with 100 ml petroleum ether, then filtered and dried to obtain 19.5 g of a solid adduct in pale-yellow powder. The zirconium content in the adduct determined by Inductive Coupling Plasma/Atomic Emission Spectrum (ICP/AES) was 19.63 wt%, the reaction yield was 93.3 wt% based on the zirconium content.

### (2) Preparation of the supported catalyst

a) Preparing the catalyst supported with the adduct and MAO:
   A silica gel with a brand-mark of Davison 955(Grace Corp., USA) was activated in a fluidized bed under nitrogen atmosphere at 200°C for 2 hours, and further activated at 600°C for 4 hours. Then the activated product was taken out while it was still hot, and placed into a vacuum dryer, which was then evacuated and cooled to room temperature to obtain a partially-dehydroxylated silica. It was then filled with nitrogen gas to keep in reserve.
   0.08 g of the adduct prepared in the step (1) was evacuated and purged, then added with 6 ml of 10%(wt) MAO solution in toluene. 0.8 g of the partially-dehydroxylated silica was evacuated and purged, then added with 6 ml solution of MAO in toluene. Two resultant solutions were stirred respectively at room temperature for 1 hours to form respective suspensions. The adduct suspension was then added to the silica suspension, the mixed suspension was stirred at 65°C for 2 hours and kept further at 65°C. Then 90 wt% of solvent was removed by vacuum, the remainder was dried at 75°C for 4 hours to obtain catalyst A. In the resultant catalyst, the Zr content was 1.07 wt% and the aluminum content was 12.56 wt%, and an Al/Zr molar ratio was 39.
b) Washing: 70 g of catalyst A was placed into a glass reactor, added with 500 ml of hexane, stirred under nitrogen atmosphere at 50°C for 1 hour, then kept at a standstill for 1 hour to settle solids to the bottom of the vessel. Thus the resultant supernatant contained very fine suspended matters. Nitrogen gas was introduced to the reactor till the supernatant was all expelled through a conduit inserted into the supernatant. The solvent remained in solid was removed by reducing pressure, and then the remained solid was dried at 75°C.

The dried solids were added again with 500 ml of hexane, the aforesaid operation was repeated for 6 times to obtain catalyst A'. The solvent in each decanted supernatant was removed by volatilization and then the remainder was dried. The metal element contents containing in then the remainder was dried. The metal element contents containing in the catalyst obtained by washing each time and the solid particles obtained by washing off each time are shown in Table 1. The particle size distributions of unwashed and washed catalysts are shown in Table 2. The particle size distribution of solid particles obtained by washing off is shown in table 3.

Table 1 shows that the contents of Zr and Al in the fine powder obtained from the first, second and third washing processes are high, the content of Zr and Al in the fine powder obtained from the forth washing process are less than those from the aforesaid washing processes, and the contents of Zr and Al in the fine powder obtained from the fifth and sixth washing processes are substantially the same.

Table 2 shows that the amount of the particles having a diameter smaller than 10 µm in the catalyst is decreased from 13.3 wt% to 4.5 wt% after 6 times washing.

Table 3 shows that the amount of the particles having a diameter smaller than 10 µm accounts for 31 wt% of the washing off powder.

### Example 2

Preparation of the catalyst supported with the adduct of di-(cyclopentadienyl) zirconium dichloride • tetrahydrofuran lithium chloride.

### (1) Preparing the adduct of di-(cyclopentadienyl) • zirconium dichloride • tetrahydrofuran • lithium chloride having the formula of Cp₂ZrCl₂ •THF• 2LiCl:

The adduct was prepared according to the procedure of Example 1, except that cyclopentadiene was used in an amount of 10.0g (0.15mol) instead of n-butyl cyclopentadiene, tetrahydrofuran (THF) was used in an amount of 200 ml, 2.5M butyl lithium solution in hexane was used in an amount of 61.0 ml (0.15 mol.), ZrCl₄ was added in an amount of 17.65 g (0.075 mol). 27.0 g of the adduct was obtained after being dried, in which the zirconium content was 23.8 wt%. The reaction yield was 94.15 wt% based on zirconium content.

### (2) Preparation of the supported catalyst:

A partially-dehydroxylated silica was prepared according to the procedure of Example 1 (2) a). 4.15 g of the adduct prepared in the step (1) was evacuated and purged, then added with 150 ml of 10%(wt) MAO solution in toluene (Albemarle Corp., USA). 30.0 g of the partially-dehydroxylated silica was evacuated and purged, then added with 150 ml MAO solution in toluene. Two resultant solutions were stirred respectively at room temperature for 1 hour to form respective suspensions. Then the adduct suspension was moved into the silica suspension, stirred at 65°C for 2 hours, and kept further at 65°C to remove 90 wt% of solvent by evacuating. The remainder was dried at 75°C for 2 hours to obtain catalyst B in which the Zr content was 1.15 wt %, the aluminum content was 13.20 wt%, and the Al/Zr molar ratio was 38.7.

After 50 g of catalyst B was washed for 3 times according to the procedure of the example 1 (2) b), the settled solids were dried at 75°C for 4 hours to obtain catalyst B'. The metal element contents containing in the catalyst obtained by washing each time and in the fine solid particles obtained by washing off each time are shown in Table 4. The particle size distributions of the unwashed and washed catalysts are shown in Table 5.

Table 5 shows that the amount of the particles of catalyst having a diameter smaller than 10 µm are reduced from 13.2 wt% to 6.1 wt% after 3 times washing.

### Example 3

Solid catalyst A' prepared in Example 1 was used for the continuous slurry copolymerization of ethylene and 1-hexene, during which hexane was added as a solvent. Under conditions of ethylene partial pressure of 1.0 MPa and 70°C, the reaction was carried out for 200 hours, no fouling phenomenon of polymer was observed. The obtained polyethylene has good grain morphology with uniform size and a bulk density of 0.39 g /ml. Its melting point Tm is 123°C determined by Differential Scanning Calorimeter (DSC), its molecular weight distribution is 2.3 measured by Gel Permeation Chromatography (GPC). Besides, the product has a melt index of 1.5~3.0 and a density of 0.920~0.935 g/cm³.

### Example 4

Solid catalyst A' prepared in Example 1 was used for a continuous gas phase copolymerization test of ethylene and 1-butylene in a fluidized bed while the molar ratio of butylene/ethylene was kept in the range of 0.01~0.06:1, and the polymerization temperature was 85°C. No fouling phenomenon was observed after 288 hours continuous polymerization. The polyethylene obtained has good grain morphology with a bulk density of 0.395 g/cm³. The average activity of the catalyst is 8000 g PE/g catalyst and the density of the product is 0.9182~0.9340 g/cm³.

### Example 5

1 liter of stainless steel autoclave for polymerization was evacuated and purged for 3 times, and filled with a small amount of ethylene; then added with a mixed solution which was prepared by mixing 2 ml of the suspension in hexane containing 20mg of catalyst A', 20ml of 1-hexene and 300 ml of hexane. Thereafter ethylene was charged into the autoclave to be pressurized to 1.0MPa, and heated to 70°C. The reaction was carried out with stirring at a rotating speed of 250 r.p.m for 2 hours. Thereafter, the polymerization reaction was terminated by adding acidic ethanol solution and the polymer was precipitated. Finally 130 g of the polymer was obtained. The activity of the catalyst A' is 6470 g PE/g catalyst.

### Example 6

The polymerization experiment of ethylene was carried out according to the procedure of Example 5, except that catalyst B' was used in the polymerization. The catalyst B' has a catalytic activity of 2380 g PE/g catalyst.

### Comparative examples 1~2

The polymerization experiment of ethylene was carried out according to the procedure of Example 5, except that unwashed catalyst A and B were used in the polymerization respectively. The activity of catalyst A was 3269 g PE/g catalyst. The activity of catalyst B was 1670 g PE/g catalyst. Thus it can be seen that the unwashed supported catalyst has a lower catalytic activity.

### Comparative example 3

The continuous slurry copolymerization of ethylene and 1-hexene was carried out according to the procedure of Example 3, except that unwashed catalyst A was used. After the reaction was carried out for 10 hours, serious fouling phenomena occurred, the polymerization temperature was thus increased rapidly, which lead to stop the reaction.

### Comparative example 4

40 g of catalyst A obtained in Example 1 was washed once with 300 ml of hexane. The remained sediment after removing the supernatant was then used as a catalyst to carry out the continuous slurry copolymerization of ethylene and 1-hexene under a condition same as Example 3. One hour later, the reaction had to be stopped as serious fouling phenomena took place on the inner wall of the reactor.

**Table 1**

| Washing times | Catalyst remained | | Fine powder washed off | | |
|---|---|---|---|---|---|
| | Zr, wt% | Al, wt% | wt, g | Zr, wt% | Al, wt% |
| 1 | 1.09 | 12.94 | 1.02 | 1.99 | 25.43 |
| 2 | 1.08 | 13.37 | 0.52 | 2.22 | 25.23 |
| 3 | 1.07 | 12.83 | 0.43 | 2.24 | 23.40 |
| 4 | 0.98 | 12.05 | 0.35 | 1.89 | 19.85 |
| 5 | 1.05 | 12.51 | 0.32 | 1.29 | 14.45 |
| 6 | 1.05 | 12.51 | 0.30 | 1.29 | 14.45 |

**Table 2**

| Particle Size Distribution | wt.% | |
|---|---|---|
| | Catalyst A | Catalyst A' |
| > 100µm | 3.1 | 3.0 |
| 70∼100µm | 17.1 | 14.2 |
| 40∼70µm | 24.3 | 30.1 |
| 20∼40µm | 25.4 | 33.5 |
| 10∼20µm | 16.8 | 14.7 |
| 2∼10µm | 9.8 | 4.3 |
| < 2µm | 3.5 | 0.2 |
| Average size µm | 31.23 | 31.49 |

**Table 3**

| Particle Size Distribution of Washing off Solids | wt.% |
|---|---|
| > 100µm | 2.0 |
| 70∼100µm | 6.0 |
| 40∼70µm | 15.0 |
| 20∼40µm | 28.0 |
| 10∼20µm | 18.0 |
| 2∼10µm | 25.0 |
| < 2µm | 6.0 |
| Average size µm | 22.6 |

**Table 4**

| Washing times | Catalyst remained | | Fine powder washed off | | |
|---|---|---|---|---|---|
| | Zr, wt% | Al, wt% | wt, g | Zr, wt% | Al, wt% |
| 1 | 1.20 | 13.24 | 0.87 | 2.08 | 25.01 |
| 2 | 1.18 | 13.40 | 0.45 | 2.13 | 25.32 |
| 3 | 1.19 | 13.50 | 0.37 | 2.16 | 25.40 |

**Table 5**

| Particle Size Distribution | wt.% | |
|---|---|---|
| | Catalyst B | Catalyst B' |
| > 100µm | 4.0 | 3.3 |
| 70∼100µm | 16.1 | 12.3 |
| 40∼70µm | 24.8 | 33.3 |
| 20∼40µm | 24.1 | 27.2 |
| 10∼20µm | 17.8 | 18.0 |
| 2∼10µm | 11.2 | 5.9 |
| < 2µm | 2.0 | 0.2 |
| Average size µm | 30.50 | 30.73 |

## Claims

1. A supported metallocene catalyst, comprising components as follows:
(a) a metallocene • ethers • inorganic salt adduct having a general formula as follows:
Cp'₂MQ₂ • Et • nM'Q_{2/n}
(b) an alkylaluminoxane and
(c) a silica carrier,
where Cp' in said formula of (a) is a cyclopentadienyl or a ligand having a cyclopentadiene skeleton which contains one or more substitution groups R, wherein two adjacent substitution groups can be interconnected to form a condensed ring, R is selected from the group consisting of C₁~C₁₂ alkyl, alkoxy, silyl, aryl or arylalkoxy;
M is one of the elements selected from Group IVB in the Periodic Table of Elements; Q is a halogen; Et is diethyl ether or tetrahydrofuran;
M' is selected from alkali metals or alkali earth metals;
n is 1 or 2, wherein if M' is an alkali metal, n is 2, and if M' is an alkali earth metal, n is 1;
**characterized in that** said supported catalyst has an average particle diameter of 20-40 µm, wherein the amount of the particles having a diameter smaller than 10 µm is less than 10 wt%, the amount of the particles having a diameter greater than 70 µm is less than 30 wt%, and the amount of the particles having a diameter between 20-70 µm is 45-65 wt%.

2. The catalyst according to claim 1, **characterized in that** said catalyst particles include less than 0.4 wt% of the particles having diameter smaller than 2µm, less than 30 wt%of the particles having diameter greater than 70 µm, and 45∼65 wt% of the particles having diameter between 20 and 70 µm.

3. The catalyst according to claim 1, **characterized in that** said Cp' in the adduct formula in (a) is a cyclopentadienyl, indenyl, fluorenyl or aforesaid group monosubstituted or multi-substituted by C₁∼C₆ alkyl groups, M is titanium or zirconium, Q is chlorine, M' is lithium, n is 2; component (b) is methylaluminoxane.

4. The catalyst according to claim 3, **characterized in that** said Cp' in the adduct in formula (a) is methyl cyclopentadienyl, n-butyl cyclopentadienyl, iso-butyl cyclopentadienyl, ethyl cyclopentadienyl, propyl cyclopentadienyl, pentamethyl cyclopentadienyl, indenyl or fluorenyl, M is titanium or zirconium, Q is chlorine, M' is lithium, n is 2; component (b) is methylaluminoxane.

5. A catalyst according to any one of claims 1~4, **characterized in that** the content of IVB group element M of the catalyst is 0.01~1.5wt%, the content of aluminum is 3~40wt%.

6. The catalyst according to claim 5, **characterized in that** the content of IVB group element M of the catalyst is 0.1~1.2 wt%, and the content of aluminum is 10~30 wt%.

7. A process for preparing said catalyst according to claim 1, comprising the steps of:
(1) treating a metallocene •ether• inorganic salt adduct and a partially-dehydroxylated silica respectively with an alkylaluminoxane solution in toluene to form respective suspensions; then contacting and mixing thoroughly the two suspensions, reducing the pressure of the mixed suspension to remove the solvent and drying the resultant remainder,
(2) adding a saturated aliphatic hydrocarbon to the dried solids aforesaid to form a suspension; after stirring, keeping the resultant suspension at a standstill till the solids no longer settle, then decanting the supernatant,
(3) adding again the saturated aliphatic hydrocarbon to the remainder to repeat the operation of step (2) till the supernatant becomes colorless, then drying the remainder.

8. The process according to claim 7, **characterized in that** said alkylaluminoxane in the step (1) is methylaluminoxane.

9. The process according to claim 7 or 8, **characterized in that** said contacting temperature of the two suspensions in the step (1) is 30~95°C.

10. The process according to claim 10, **characterized in that** said saturated aliphatic hydrocarbon in the step (2) is selected from C₅~C₈ saturated aliphatic hydrocarbons, and the stirring temperature is 30~80°C.

11. The process according to claim 7 or 8, **characterized in that** said saturated aliphatic hydrocarbon in the step (2) is preferably hexane or n-heptane, the stirring temperature is 40~70°C, the time for keeping at a standstill is 0.5~4.0 hours.

12. The process according to claim 7 or 8, **characterized in that** a weight ratio of the saturated aliphatic hydrocarbon to the solids in the step (2) is 0.5~10:1.

13. The process according to claim 7 or 8, **characterized in that**, in the step (2), the supernatant is removed by pressurizing with nitrogen gas after stirring and keeping at a standstill.

14. The process according to claim 7 or 8, **characterized in that** said supernatant in the step (2) is a solvent containing suspended fine solids incapable to settle.

15. The process according to claim 7 or 8, **characterized in that** the number of washing times of step (2) and step (3) is 3~6 times.

## Patentansprüche

1. Gestützter Metallocen-Katalysator mit den folgenden Bestandteilen:
(a) ein Addukt Metallocen •Ether• anorganisches Salz mit einer allgemeinen Formel wie folgt:
Cp' ₂MQ₂ • Et • nM'Q_{2/n}
(b) ein Alkylaluminoxan, und
(c) ein Silica-Träger,
wobei Cp' in der Formel von (a) ist ein Cyclopentadienyl oder ein Ligand mit einem Cyclopentadien-Gerüst, welches enthält ein oder mehrere Substitutionsgruppen R, wobei zwei benachbarte Substitutionsgruppen miteinander verknüpft sein können, um einen kondensierten Ring zu bilden, R gewählt ist aus der Gruppe bestehend aus C₁∼C₁₂ Alkyl, Alkoxy, Silyl, Aryl oder Arylalkoxy;
M ist eines der Elemente gewählt aus Gruppe IV B in dem Periodensystem der Elemente; Q ist ein Halogen; Et ist Diethylether oder Tetrahydrofuran;
M' ist gewählt aus Alkalimetallen oder Erdalkalimetallen;
n ist 1 oder 2, wobei wenn M' ein Alkalimetall ist, n ist 2, und wenn M' ein Erdalkalimetall ist, n ist 1;
**dadurch gekennzeichnet, dass** der gestützte Katalysator einen durchschnittlichen Partikeldurchmesser von 20-40 µm hat, wobei die Menge der Partikel mit einem Durchmesser kleiner als 10 µm weniger als 10 Gew-% ist, die Menge der Partikel mit einem Durchmesser grösser als 70 µm weniger als 30 Gew-% ist, und die Menge der Partikel mit einem Durchmesser zwischen 20-70 µm ist 45-65 Gew-%.

2. Katalysator nach Anspruch 1, **dadurch gekennzeichnet, dass** die Katalysator-Partikel beinhalten weniger als 0,4 Gew-% von Partikeln mit einem Durchmesser kleiner als 2 µm, weniger als 30 Gew-% von Partikeln mit einem Durchmesser grösser als 70 µm, und 45∼65 Gew-% von Partikeln mit einem Durchmesser zwischen 20 und 70 µm.

3. Der Katalysator nach Anspruch 1, **dadurch gekennzeichnet, dass** das Cp' in der Addukt-Formel in (a) ist ein Cyclopentadienyl, Indenyl, Fluorenyl oder besagte Gruppe monosubstituiert oder mehrfach-substituiert durch C₁~C₆ Alkylgruppen, M ist Titan oder Zirkonium, Q ist Chlor, M' ist Lithium, n ist 2; Bestandteil (b) ist Methylaluminoxan.

4. Katalysator nach Anspruch 3, **dadurch gekennzeichnet, dass** das Cp' in dem Addukt in Formel (a) ist Methylcyclopentadienyl, n-Butylcyclopentadienyl, iso-Butylcyclopentadienyl, Ethylcyclopentadienyl, Propylcyclopentadienyl, Pentamethylcyclopentadienyl, Indenyl oder Fluorenyl, M ist Titan oder Zirkonium, Q ist Chlor, M' ist Lithium, n ist 2; Bestandteil (b) ist Methylaluminoxan.

5. Katalysator nach einem der Ansprüche 1~4, **dadurch gekennzeichnet, dass** der Anteil des Elements M der Gruppe IV B des Katalysators ist 0,01-1,5 Gew-%, der Anteil von Aluminium ist 3-40 Gew-%.

6. Katalysator nach Anspruch 5, **dadurch gekennzeichnet, dass** der Anteil des Elements M der Gruppe IV B des Katalysators ist 0,1∼1,2 Gew-%, und der Anteil von Aluminium ist 10~30 Gew-%.

7. Verfahren zum Herstellen des Katalysators nach Anspruch 1, mit den Schritten:
(1) Behandeln eines Addukts Metallocen •Ether• anorganisches Salz und ein teilweise dehydroxyliertes Silica jeweils mit einer Alkylaluminoxan-Lösung in Toluol, um jeweilige Suspensionen zu bilden; danach in-Kontakt-Bringen und sorgfältiges Vermischen der beiden Suspensionen, Reduzieren des Drucks der gemischten Suspension, um das Lösungsmittel zu entfernen und Trocknen des resultierenden Rückstands,
(2) Hinzufügen eines gesättigten aliphatischen Kohlenwasserstoffs zu den getrockneten besagten Feststoffen, um eine Suspension zu bilden; nach Rühren, Beibehalten der resultierenden Suspension bei einem Stillstehen bis die Feststoffe sich nicht länger abscheiden, danach Dekantieren der überstehenden Flüssigkeit,
(3) wieder Hinzufügen des gesättigten aliphatischen Kohlenwasserstoffs zu dem Rückstand, um zu wiederholen die Operation von Schritt (2) bis die überstehende Flüssigkeit farblos wird, danach Trocknen des Rückstandes.

8. Verfahren nach Anspruch 7, **dadurch gekennzeichnet, dass** das Alkylaluminoxan in Schritt (1) ist Methylaluminoxan.

9. Verfahren nach Anspruch 7 oder 8, **dadurch gekennzeichnet, dass** die berührende Temperatur der beiden Suspensionen im Schritt (1) ist 30~95°C.

10. Verfahren nach Anspruch 10, **dadurch gekennzeichnet, dass** der gesättigte aliphatische Kohlenwasserstoff in Schritt (2) gewählt ist aus C₅~C₈ gesättigten aliphatischen Kohlenwasserstoffen, und die Temperatur bei Rühren ist 30~80°C.

11. Verfahren nach Anspruch 7 oder 8, **dadurch gekennzeichnet, dass** der gesättigte aliphatische Kohlenwasserstoff in Schritt (2) vorzugsweise Hexan oder n-Heptan, die Temperatur bei Rühren ist 40~70°C, die Zeit für das Beibehalten bei einem Stillstehen 0,5~4,0 Stunden ist.

12. Verfahren nach Anspruch 7 oder 8, **dadurch gekennzeichnet, dass** ein Gewichtsverhältnis des gesättigten aliphatischen Kohlenwasserstoffs zu den Feststoffen im Schritt (2) ist 0,5~10:1.

13. Verfahren nach Anspruch 7 oder 8, **dadurch gekennzeichnet, dass** im Schritt (2) die überstehende Flüssigkeit entfernt wird durch unter Druck Setzen mit Stickstoffgas nach Rühren und Beibehalten bei einem Stillstehen.

14. Verfahren nach Anspruch 7 oder 8, **dadurch gekennzeichnet, dass** die überstehende Flüssigkeit im Schritt (2) ein Lösungsmittel ist, welches enthält feine suspendierte Feststoffe, welche unfähig sind, sich abzuscheiden.

15. Verfahren nach Anspruch 7 oder 8, **dadurch gekennzeichnet, dass** die Anzahl der waschenden Male von Schritt (2) und Schritt (3) ist 3~6 Male.

## Revendications

1. Catalyseur à base de métallocène sur support, comprenant les composants suivants :
(a) un produit d'addition métallocène . éthers . sel minéral ayant une formule générale comme suit :
Cp'₂MQ₂ · Et · nM'Q_{2/n}
(b) un alkylaluminoxane, et
(c) un support de silice,
dans lequel Cp' dans ladite formule de (a) est un cyclopentadiényle ou un ligand ayant un squelette cyclopentadiène qui contient un ou plusieurs groupes de substitution R, dans lequel deux groupes de substitution adjacents peuvent être interconnectés pour former un anneau condensé, R est choisi dans le groupe consistant en alkyle en C₁-C₁₂, alcoxy, silyle, aryle ou arylalcoxy ;
M est l'un des éléments choisis dans le groupe IVB dans le tableau périodique des éléments ; Q est un halogène ; Et est un diéthyl éther ou un tétrahydrofurane ;
M' est choisi à partir de métaux alcalins ou de métaux alcalino-terreux ;
n est 1 ou 2, dans lequel si M' est un métal alcalin, n est 2, et si M' est un métal alcalino-terreux, n est 1 ;
**caractérisé en ce que** ledit catalyseur sur support présente un diamètre de particule moyen de 20-40 *µ*m, dans lequel la quantité des particules ayant un diamètre inférieur à 10 *µ*m est inférieure à 10 % en poids, la quantité des particules ayant un diamètre supérieur à 70 µm est inférieure à 30 % en poids et la quantité des particules ayant un diamètre entre 20-70 *µ*m est de 45-65 % en poids.

2. Catalyseur selon la revendication 1, **caractérisé en ce que** lesdites particules de catalyseur comprennent moins de 0,4 % en poids des particules ayant un diamètre inférieur à 2 *µ*m, moins de 30 % en poids des particules ayant un diamètre supérieur à 70 *µ*m, et 45-65 % en poids des particules ayant un diamètre entre 20 et 70 *µ*m.

3. Catalyseur selon la revendication 1, **caractérisé en ce que** ledit Cp' dans la formule de produit d'addition en (a) est un cyclopentadiényle, indényle, fluorényle ou un groupe précité monosubstitué ou multisubstitué par des groupes alkyle en C₁-C₆, M est le titane ou le zirconium, Q est le chlore, M' est le lithium, n est 2 ; le composant (b) est le méthylaluminoxane.

4. Catalyseur selon la revendication 3, **caractérisé en ce que** ledit Cp' dans le produit d'addition dans la formule (a) est le méthyl cyclopentadiényle, le n-butyl cyclopentadiényle, l'iso-butyl cyclopentadiényle, l'éthyl cyclopentadiényle, le propyl cyclopentadiényle, le pentaméthyl cyclopentadiényle, l'indényle ou le fluorényle, M est le titane ou le zirconium, Q est le chlore, M' est le lithium, n est 2 ; le composant (b) est le méthylaluminoxane.

5. Catalyseur selon l'une quelconque des revendications 1-4, **caractérisé en ce que** la teneur en élément M du groupe IVB du catalyseur est de 0,01-1,5 % en poids, la teneur en aluminium est de 3-40 % en poids.

6. Catalyseur selon la revendication 5, **caractérisé en ce que** la teneur en élément M du groupe IVB du catalyseur est de 0,1-1,2 % en poids, et la teneur en aluminium est 10-30 % en poids.

7. Procédé pour préparer ledit catalyseur selon la revendication 1, comprenant les étapes suivantes :
(1) traiter un produit d'addition métallocène . éther . sel minéral et une silice partiellement déshydroxylée, respectivement, avec une solution d'alkylaluminoxane dans le toluène pour former des suspensions respectives ; puis mettre en contact et mélanger complètement les deux suspensions, réduire la pression de la suspension mélangée pour enlever le solvant et sécher le produit restant,
(2) ajouter un hydrocarbure aliphatique saturé aux matières solides séchées précitées pour former une suspension ; après agitation, maintenir la suspension résultante au repos jusqu'à ce que les matières solides ne se déposent plus, puis décanter le surnageant,
(3) ajouter à nouveau l'hydrocarbure aliphatique saturé au reste pour répéter l'opération de l'étape (2) jusqu'à ce que le surnageant devienne limpide, puis sécher le produit restant.

8. Procédé selon la revendication 7, **caractérisé en ce que** ledit alkylaluminoxane à l'étape (1) est le méthylaluminoxane.

9. Procédé selon la revendication 7 ou 8, **caractérisé en ce que** ladite température de contact des deux suspensions à l'étape (1) est de 30-95°C.

10. Procédé selon la revendication 9, **caractérisé en ce que** ledit hydrocarbure aliphatique saturé à l'étape (2) est choisi à partir de C₅-C₈ hydrocarbures aliphatiques saturés, et la température d'agitation est de 30-80°C.

11. Procédé selon la revendication 7 ou 8, **caractérisé en ce que** ledit hydrocarbure aliphatique saturé à l'étape (2) est de préférence l'hexane ou le n-heptane, la température d'agitation est de 40-70°C, le temps pour maintenir au repos est de 0,5-4,0 heures.

12. Procédé selon la revendication 7 ou 8, **caractérisé en ce qu'**un rapport pondéral de l'hydrocarbure aliphatique saturé par rapport aux matières solides à l'étape (2) est de 0,5-10:1.

13. Procédé selon la revendication 7 ou 8, **caractérisé en ce qu'**à l'étape (2), le surnageant est enlevé par mise sous pression avec du gaz azote après agitation et maintien au repos.

14. Procédé selon la revendication 7 ou 8, **caractérisé en ce que** ledit surnageant à l'étape (2) est un solvant contenant des matières solides fines en suspension incapables de se déposer.

15. Procédé selon la revendication 7 ou 8, **caractérisé en ce que** le nombre de fois de lavages de l'étape (2) et de l'étape (3) est de 3-6 fois.
